# EUROPÄISCHE PATENTSCHRIFT

(11) **EP 3 119 006 B1**
(45) Veröffentlichungstag und Bekanntmachung des Hinweises auf die Patenterteilung: **29.08.2018**
(21) Anmeldenummer: 15176855.3
(22) Anmeldetag: 15.07.2015
(51) Int. Cl.: H04B 1/00, H04M 1/725, H04W 48/18, H04W 88/04

(54) **VERFAHREN UND ELEKTRONIK ZUM AUFBAUEN EINES LOKALEN BREITBANDNETZES**
METHOD AND ELECTRONIC SYSTEM FOR BUILDING A LOCAL BROADBAND NETWORK
MÉTHODE ET SYSTÈME ÉLECTRONIQUE POUR LA CONSTRUCTION D'UN RÉSEAU LOCALE À LARGE BANDE

(43) Veröffentlichungstag der Anmeldung: 18.01.2017
(73) Patentinhaber: RadioLED Holding AG, 8661 Wartberg (AT)
(72) Erfinder: Strasser, Andreas, 6344 Kössen (AT)
(74) Vertreter: Meyer zu Bexten, Elmar

(56) Entgegenhaltungen:
- US-A- 5 442 805
- US-A1- 2007 010 261
- US-A1- 2011 039 579
- LI ZEXIAN ET AL: "Overview on initial METIS D2D concept", 1ST INTERNATIONAL CONFERENCE ON 5G FOR UBIQUITOUS CONNECTIVITY, ICST, 26. November 2014 (2014-11-26), Seiten 203-208, XP032735035, DOI: 10.4108/ICST.5GU.2014.258096 [gefunden am 2015-02-11]
- FUMIHIDE KOJIMA ET AL: "Necessary Modifications on Conventional IEEE802.15.3b MAC to Achieve IEEE802.15.3c Millimeter Wave WPAN", IEEE INTERNATIONAL SYMPOSIUM ON PERSONAL, INDOOR AND MOBILE RADIO COMMUNICATIONS. PIMRC, IEEE; PI, XX, 1. September 2007 (2007-09-01), Seiten 1-5, XP031168693, ISBN: 978-1-4244-1143-6

## Beschreibung

Die vorliegende Erfindung betrifft ein Verfahren zum Aufbauen eines lokalen Breitbandnetzes. Die vorliegende Erfindung betrifft darüber hinaus eine entsprechende Elektronik, ein entsprechendes Computerprogramm sowie ein entsprechendes Speichermedium.

### Stand der Technik

Auf dem Gebiet der Netzwerkarchitektur ist das sogenannte vermaschte Netz (*mesh*) bekannt. Vermaschte Netze nach dem Stand der Technik sind im Regelfall selbstheilend und dadurch sehr zuverlässig: Wenn ein Knoten oder eine Verbindung blockiert ist oder ausfällt, kann sich das Netz darum herum neu organisieren. Die Daten werden umgeleitet und das Netzwerk ist nach wie vor betriebsfähig.

Das Konzept vermaschter Netze lässt sich sowohl auf kabelgebundene oder Funknetzwerke als auch auf die Interaktion von Programmen anwenden. Mobile Ad-hoc-Netzwerke (MANet), die von vielen Verbrauchergeräten unterstützt werden, stellen einen Unterbereich der vermaschten Netzwerke dar. In großen Netzen findet man oftmals eine Struktur, die sich aus mehreren verschiedenen Topologien zusammensetzt. So ist das Internet in weiten Teilen ein vermaschtes Netz; trotzdem gibt es "Hauptverkehrsadern" (die Backbone-Leitungen), die einem Ring ähneln.

US 2011/039579 A1 (KARJALAINEN ANTTI [FI]) 17. Februar 2011 (2011-02-17) offenbart:
Verfahren zum Aufbauen eines lokalen Breitbandnetzes, gekennzeichnet durch folgende Merkmale:
- eine Elektronik bestimmt einen geografischen Standort der Elektronik,
- die Elektronik wählt abhängig von dem Standort eine Außenfunktion in dem Breitbandnetz,
- die Elektronik befolgt ein von der Außenfunktion abhängiges Kommunikationsprotokoll des Breitbandnetzes.

### Offenbarung der Erfindung

Die Erfindung stellt ein Verfahren zum Aufbauen eines lokalen Breitbandnetzes, eine entsprechende Elektronik, ein entsprechendes Computerprogramm sowie ein entsprechendes Speichermedium gemäß den unabhängigen Ansprüchen bereit. Durch die Integration des Netzwerkaufbaus anhand einer Messung des Istzustandes durch die integrierte Elektronik konfiguriert sich diese beispielsweise als Repeater, Basisstation, Switch, Hub, Gateway, Accesspoint oder Kommunikationsendgerät. Diese Information wird an eine zentrale Datenbank übermittelt und die passenden Kommunikationsprotokolle zur Verfügung gestellt. Dadurch ergibt sich ein Konverter für verschiedenste Protokolle aus der Kommunikationstechnik. Die durch die Elektronik gewählten Protokolle können jeglichen Mobilfunkstandard abdecken und den diversen Provider angeboten werden. Die Erfindung ist durch die unabhängigen Ansprüche definiert.

Weitere vorteilhafte Ausgestaltungen der Erfindung sind in den abhängigen Patentansprüchen angegeben. So können zumindest das Messen des Istzustandes und das Wählen der Außenfunktion automatisch, also ohne zentrale Steuerung oder Zugriff auf externe Datenbanken erfolgen. In die Elektronik ist hierzu eine automatische Messung der bestehenden Umgebungsfrequenzen und Protokolle integriert. Durch deren Ergebnis entscheidet die Elektronik selbständig, welche Frequenzbereiche und Protokolle in dem lokalen Netzwerk angeboten werden sollen. Durch dieses System können Regionen mit Mobilfunk oder kabelgebundenem Netz sehr schnell erschlossen werden. Durch die Automatik wird auch der Anschluss an ein dezentrales Netzwerk ermöglicht.

In einer möglichen Ausführungsform betätigt die Elektronik abhängig von der Außenfunktion eine Antennensteuerung. Durch die Steuerung der Antennenstruktur und anhand der durch die Elektronik selbst gemessenen Standorte können Grenzwerte vorab konfiguriert und beim Aufbau des vermaschten Netzwerkes durch die Elektronik automatisch eingehalten werden.

Die Antennensteuerung erfolgt dabei vorzugsweise mittels eines von einem Frequenzgenerator über einen Datenmodulator gespeisten Multiplexers. Die Erfindung bietet somit einen neuen und kostengünstigen Weg, durch die in die Elektronik integrierten Komponente ein Netzwerk im Bereich von 400 kHz bis 6 GHz automatisch aufzubauen und jederzeit durch ein zentral gesteuertes Softwarepaket Übertragungsprotokolle in o. g. Frequenzbereichen nachzurüsten oder zu aktualisieren und macht daher einen Vororttausch der Komponenten bei Protokollwechsel oder Neuvergabe eines Frequenzbereiches unnötig.

Sollte eine Region bereits erschlossen sein, schaltet die Elektronik in einer bevorzugten Variante der Erfindung automatisch auf die Funktion eines Repeaters um und senkt dadurch die Funkbelastung, welche sonst in der Region nötig wäre.

Ist eine Region noch funktechnisch unerschlossen, bietet die Elektronik in einer entsprechenden Ausgestaltung automatisch die Möglichkeit, eine multiproviderfähige Basisstation zu bilden und kann nahtlos in das Netzwerk des Mobilfunkproviders integriert werden. Durch den Automatismus der Elektronik kann auch ein erhöhter Lastbedarf in einer erschlossenen Region ausgeglichen werden, ohne zusätzlich eine Netzwerkinfrastruktur durch den Provider schaffen zu müssen.

Der zum Messen des Istzustandes in die Elektronik integrierte Hochfrequenzfilter (HF-Filter) ist vorteilhafterweise ein aus Glas gefertigter, vakuumierter, durch Metalle innenbeschichteter Filter.

### Kurze Beschreibung der Zeichnungen

Ein Ausführungsbeispiel der Erfindung ist in den Zeichnungen dargestellt und wird im Folgenden näher beschrieben.
Figur 1 zeigt ein Verfahren gemäß einer Ausführungsform der Erfindung.
Figur 2 zeigt ein Blockdiagramm mit den Ein- und Ausgängen der Elektronik. Des Weiteren ist die in die Elektronik integrierte Antennenansteuerung ersichtlich.
Figur 3 stellt eine Region von erschlossenen und unerschlossenen Bereichen dar und zeigt drei Funktionsmöglichkeiten der Elektronik (Basisstation, Repeater, Kommunikationsgerät) für verschiedene Bereiche. Ferner sind in Figur 3 einige Verbindungsmöglichkeiten mit den unterschiedlichen Funktionalitäten der erfindungsgemäßen Elektronik dargestellt.

### Ausführungsformen der Erfindung

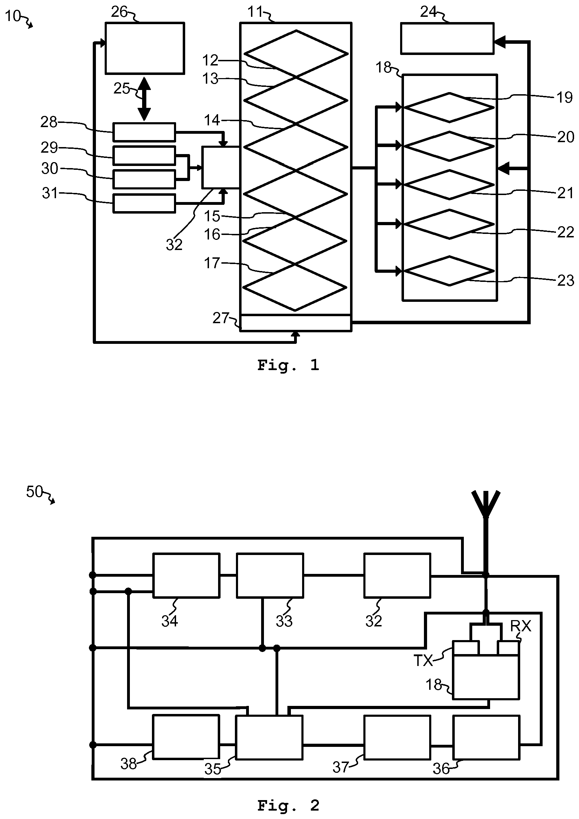

Figur 1 illustriert ein erfindungsgemäßes Verfahren (10) zum Aufbauen eines lokalen Breitbandnetzes. Die Elektronik nimmt dabei zunächst eine umfassende Analyse und Messung (11) ihres Standortes (12) sowie des dort vorgefundenen Istzustandes (13-17) vor. Letzterer definiert sich vorliegend durch die in der Umgebung genutzten Frequenzbänder (13) und die jeweilige Stärke (14) der in diesen erfassten Signale, die Geschwindigkeit von Upload und Download (15) sowie umweltmedizinische (16) und insbesondere lokale Grenzwerte (17) für die zulässige Strahlungsbelastung.

Anhand der erfolgten Analyse und Messung (11) wählt die Elektronik eine Außenfunktion (18). So mag die Elektronik etwa als Basis-Sendeempfängerstation (*base transceiver Station,* BTS), kurz Basisstation (19), Repeater (20), Gateway (21) oder Accesspoint (22) fungieren oder als Kommunikationsendgerät anwendungsfallabhängig eine Vielzahl weiterer Funktionen (23) ausfüllen. In Abhängigkeit der gewählten Außenfunktion (18) erfolgt sodann eine fortwährende Antennensteuerung (24) durch die Elektronik, wobei für eine der geometrischen Kontur der Umgebung angepasste Strahlformung (*beamforming*) auch der Standort (12) herangezogen werden kann.

Die Elektronik überträgt die aus der Analyse und Messung (11) resultierenden Daten (25) ferner gemäß dem Internetprotokoll (IP) an die Datenbank eines Rechenzentrums (26), welches der Elektronik auf dieser Grundlage Konfigurationsupdates (27) zur Verfügung stellt. Fällt die Netzwerklast der Elektronik unter einen gewissen Schwellwert, so kann die Elektronik anhand des abgerufenen Konfigurationsupdates (27) ihre Verbindungen nach einem aktualisierten Regelwerk neu bewerten und im Speicher als neuen Netzwerkplan hinterlegen.

Die Übertragung der Daten (25) sowie der Empfang der Konfigurationsupdates (27) können dabei wahlweise per Ethernet (28), Lichtwellenleiter (*fiber,* 29) sowie in Funk- (30) oder Trägerfrequenztechnik (*powerline communication,* PLC, 31) erfolgen. Falls eine unmittelbare IP-Verbindung zum Rechenzentrum (26) nicht möglich ist, kann die Elektronik so gemäß dem hinterlegten Netzwerkplan zumindest eine mittelbare Verbindung über den nächsten mehrpunktfähigen Netzwerkknoten (19-23) herstellen. Zur simultanen Übertragung der unterschiedlichen Daten über eine einzige Antennenstruktur werden diese durch einen geeigneten Multiplexer (32) gebündelt.

Figur 2 verdeutlicht die beschriebene Funktionsweise anhand einer schematischen Übersicht der Elektronik (50). Der mit Sender (*transmit,* TX) und Empfänger (*receive,* RX) der Antennensteuerung (18) verbundene Multiplexer (32) wird hier erkennbar über einen Datenmodulator (33) von einem Frequenzgenerator (34) mit den verschiedenen Basisbändern gespeist, wobei Empfänger (TX), Datenmodulator (33) und Frequenzgenerator (34) über einen gemeinsamen Hauptprozessor (*central processing unit,* CPU, 35) der Elektronik (50) gesteuert werden.

Die durch den Empfänger (RX) aufgenommenen Eingangssignale werden ihrerseits über ein Hochfrequenzfilter (36) einer Signalverarbeitung (37) zugeführt. Die demodulierten Nutz- und Konfigurationsdaten können so durch den Hauptprozessor (35) weiterverarbeitet werden. Letzterer kann bei entsprechender Auslegung zugleich beispielsweise zur Lichtsteuerung (38) dienen, sodass sich die Elektronik (50) etwa als Teil einer Beleuchtungsanlage in die kommunale Infrastruktur integriert.

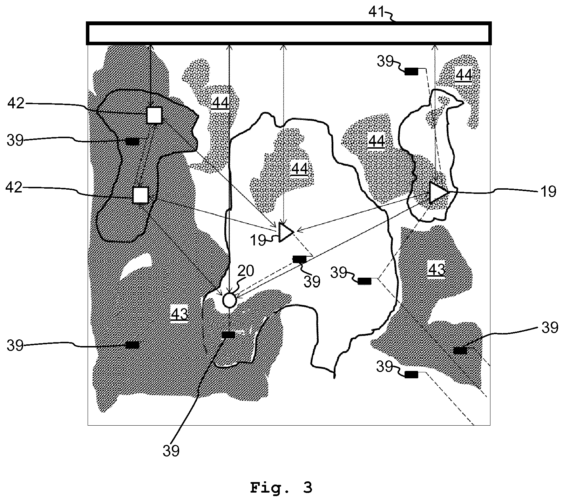

Figur 3 beleuchtet diesen Anwendungsfall anhand einer einfachen Topologie. Abbildungsgemäß bilden die bedarfsweise als Basisstation (19), Repeater (20) oder Kommunikationsendgerät (42) dienenden Netzwerkknoten (19, 20, 42) mitsamt ihrer wechselseitigen Verbindungen hier ein lokal vermaschtes Netz, das eine Vielzahl mobiler Endgeräte (39) mit einem gemeinsamen Kommunikationsbackbone (41) verbindet. Abhängig vom gemessenen Istzustand (13-17, siehe Figur 1) ordnet die jedem Netzwerkknoten (19, 20, 42) innewohnende gleichartige Elektronik (50, siehe Figur 2) hierzu den zuvor bestimmten Standort (12, siehe Figur 1) einem für das Breitbandnetz erschlossenen Gebiet (43) oder einem für das Breitbandnetz unerschlossenen Gebiet (44) zu. Wiederum abhängig von der Zuordnung zu einem der genannten Gebiete (43, 44) fungiert die Elektronik (50) sodann als Basisstation (19), Repeater (20) oder Kommunikationsendgerät (42).

## Patentansprüche

1. Verfahren (10) zum Aufbauen eines lokalen Breitbandnetzes, umfassend die folgenden Schritte:
- eine Elektronik (50) bestimmt einen geografischen Standort (12) der Elektronik (50),
- die Elektronik (50) wählt abhängig von dem Standort (12) eine Außenfunktion (18) in dem Breitbandnetz und
- die Elektronik (50) befolgt ein von der Außenfunktion (18) abhängiges Kommunikationsprotokoll des Breitbandnetzes, indem die Elektronik (50) abhängig von der gewählten Außenfunktion (18) fungiert als
i. ein Repeater (20),
ii. eine vorzugsweise multiproviderfähige Basisstation (19),
iii. ein Switch,
iv. ein Hub,
v. ein Gateway (21),
vi. ein Accesspoint (22) oder
vii. ein Kommunikationsendgerät (42),
**gekennzeichnet durch** folgende Merkmale:
- die Elektronik (50) misst einen durch die in der Umgebung genutzten Frequenzbänder (13) und die jeweilige Stärke (14) der in diesen erfassten Signale, die Geschwindigkeit von Upload und Download (15) sowie umweltmedizinische Grenzwerte (16, 17) für die zulässige Strahlungsbelastung definierten Istzustand (13-17) des Breitbandnetzes an dem Standort (12),
- die Wahl der Außenfunktion (18) hängt auch vom Istzustand (13-17) ab und
- die Elektronik (50) meldet zumindest den Standort (12) und die Außenfunktion (18) über einen gemeinsamen Kommunikationsbackbone (41) an eine zentrale Datenbank (26).

2. Verfahren nach Anspruch 1,
**gekennzeichnet durch** folgendes Merkmal:
- zumindest das Messen des Istzustandes (13-17) und das Wählen der Außenfunktion (18) erfolgen ohne zentrale Steuerung oder Zugriff auf externe Datenbanken.

3. Verfahren nach Anspruch 1 oder 2,
**gekennzeichnet durch** folgendes Merkmal:
- die Elektronik (50) betätigt abhängig von der Außenfunktion (18) eine Antennensteuerung (24).

4. Verfahren nach Anspruch 3,
**gekennzeichnet durch** folgendes Merkmal:
- die Antennensteuerung (24) erfolgt mittels eines von einem Frequenzgenerator (34) über einen Datenmodulator (33) gespeisten Multiplexers (32).

5. Verfahren nach Anspruch 1,
**gekennzeichnet durch** folgende Merkmale:
- abhängig von dem Istzustand (13-17) ordnet die Elektronik (50) den Standort (12) einem für das Breitbandnetz erschlossenen Gebiet (43) oder einem für das Breitbandnetz unerschlossenen Gebiet (44) zu und
- falls der Standort (12) dem unerschlossenen Gebiet (43) zugeordnet wird, fungiert die Elektronik (50) als der Repeater (20).

6. Verfahren nach Anspruch 5,
**gekennzeichnet durch** folgende Merkmale:
- falls der Standort (12) dem erschlossenen Gebiet (43) zugeordnet wird, fungiert die Elektronik (50) als die Basisstation (19).

7. Elektronik (50) zum Aufbauen eines Breitbandnetzes, **gekennzeichnet durch**
- Mittel derart ausgestattet, dass sie einen geographischen Standort (12) der Elektronik (50) bestimmen,
- Mittel derart ausgestattet, dass sie, abhängig von dem Standort (12) eine Außenfunktion der Elektronik (50) in dem Breitbandnetz wählen,
- Mittel derart ausgestattet, dass sie ein von der Außenfunktion abhängiges Kommunikationsprotokoll des Breitbandnetzes befolgen, indem die Elektronik abhängig von der gewählten Außenfunktion (18) fungiert als
i. ein Repeater (20),
ii. eine vorzugsweise multiproviderfähige Basisstation (19),
iii. ein Switch,
iv. ein Hub,
v. ein Gateway (21),
vi. ein Accesspoint (22) oder
vii. ein Kommunikationsendgerät (42), **gekennzeichnet durch** folgende Merkmale:
- Mittel derart ausgestattet,dass sie einen durch die in der Umgebung genutzten Frequenzbänder (13) und die jeweilige Stärke (14) der in diesen erfassten Signale, die Geschwindigkeit von Upload und Download (15) sowie umweltmedizinische Grenzwerte (16, 17) für die zulässige Strahlungsbelastung definierten Istzustand (13-17) des Breitbandnetzes an dem Standort (12) messen, wobei die Wahl der Außenfunktion auch vom Istzustand abhängt und
- Mittel derart ausgestattet, dass sie zumindest den Standort (12) und die Außenfunktion (18) über einen gemeinsamen Kommunikationsbackbone (41) an eine zentrale Datenbank (26) melden.

8. Computerprogramm, welches dazu eingerichtet ist, alle Schritte eines Verfahrens (10) nach einem der Ansprüche 1 bis 6 durchzuführen.

9. Maschinenlesbares Speichermedium mit einem darauf: gespeicherten Computerprogramm nach Anspruch 8.

## Claims

1. Method (10) for setting up a local broadband network, comprising the following steps:
- an electronic system (50) determines a geographical location (12) of the electronic system (50),
- dependent on the location (12), the electronic system (50) selects an external function (18) in the broadband network and
- the electronic system (50) follows a communications protocol of the broadband network depending on the external function (18) wherein, depending on the selected external function (18), the electronic system (50) functions as
i. a repeater (20),
ii. a base station (19), preferably having multiprovider capability
iii. a switch,
iv. a hub,
v. a gateway (21),
vi. an access point (22) or
vii. a communications terminal (42), **characterised by** the following features:
- the electronic system (50) measures an actual state (13-17) of the broadband network at the location (12) defined by the frequency bands (13) used in the surrounding area and the particular strength (14) of the signals acquired in the latter, the upload and download speeds (15) as well as environmental health-related limits (16, 17) for permitted radiation levels,
- the selection of the external function (18) also depends on the actual state (13-17) and
- the electronic system (50) reports at least the location (12) and the external function (18) by a common communications backbone (41) to a central database (26).

2. Method according to claim 1, **characterised by** the following feature:
- at least the measurement of the actual state (13-17) and the selection of the external function (18) are carried out without central control or access to external databases.

3. Method according to claim 1 or 2, **characterised by** the following feature:
- depending on the external function (18), the electronic system (50) activates an antenna control (24).

4. Method according to claim 3, **characterised by** the following feature:
- the antenna control (24) is activated by means of a multiplexer (32) powered by a frequency generator (34) via a data modulator (33).

5. Method according to claim 1, **characterised by** the following features:
- depending on the actual state (13-17), the electronic system (50) assigns the location (12) to a region (43) accessible for the broadband network or to a region (44) inaccessible for the broadband network and
- if the location (12) is assigned to the inaccessible region (43), the electronic system (50) functions as the repeater (20).

6. Method according to claim 5, **characterised by** the following features:
- if the location (12) is assigned to the accessible region (43), the electronic system (50) functions as the base station (19) .

7. Electronic system (50) to set up a broadband network,
**characterised by**
- means allowing it to determine a geographical location (12) of the electronic system (50),
- means allowing it to select, depending on the location (12), an external function of the electronic system (50) in the broadband network,
- means allowing it to follow a communications protocol of the broadband network depending on the external function, wherein, depending on the selected external function (18), the electronic system functions as
i. a repeater (20),
ii. a base station (19), preferably having multiprovider capability,
iii. a switch,
iv. a hub,
v. a gateway (21),
vi. an access point (22) or
vii. a communications terminal (42), **characterised by** the following features:
- means of measuring an actual state (13-17) of the broadband network at the location (12) defined by the frequency bands (13) used in the surrounding area and the particular strength (14) of the signals acquired in the latter, the upload and download speeds (15) as well as environmental health-related limits (16, 17) for permitted radiation levels, wherein the selection of the external function also depends on the actual state and
- means allowing it to report at least the location (12) and the external function (18) by a common communications backbone (41) to a central database (26).

8. Computer programme which is arranged to carry out all steps of a method (10) according to one of the steps 1 to 6.

9. Machine-readable storage medium with a computer programme according to claim 8 stored on it.

## Revendications

1. Procédé (10) pour l'établissement d'un réseau local à large bande comprenant les étapes suivantes :
- un système électronique (50) détermine un lieu géographique (12) du système électronique (50),
- le système électronique (50) sélectionne un fonctionnement en extérieur (18) dans le réseau à large bande en fonction du lieu (12) et
- le système électronique (50) suit un protocole de communication du réseau à large bande selon le fonctionnement en extérieur (18), le système électronique (50) agissant selon le fonctionnement en extérieur (18) sélectionné comme
i. un répéteur (20),
ii. une station de base de préférence multi-prestataire (19),
iii. un commutateur,
iv. une plate-forme,
v. une passerelle (21),
vi. un point d'accès (22) ou
vii. un terminal de communication (42), **caractérisé par** les caractéristiques suivantes :
- le système électronique (50) mesure sur le lieu (12) un état réel (13-17) du réseau à large bande défini pour l'exposition au rayonnement admissible par les bandes de fréquence (13) utilisées dans l'environnement et la puissance (14) respective des signaux qui y sont saisis, la vitesse de chargement et de téléchargement (15) ainsi que les limites en médecine environnementale (16, 17),
- la sélection du fonctionnement en extérieur (18) dépend également de l'état réel (13-17) et
- le système électronique (50) signale au moins le lieu (12) et le fonctionnement en extérieur (18) par une dorsale de communication (41) commune à une base de données centrale (26).

2. Procédé selon la revendication 1, **caractérisé par** une caractéristique suivante :
- au moins l'état réel (13-17) est mesuré et le fonctionnement en extérieur (18) sélectionné sans commande centrale ou accès aux bases de données externes.

3. Procédé selon la revendication 1 ou 2, **caractérisé par** une caractéristique suivante :
- le système électronique (50) actionne une commande d'antenne (24) selon le fonctionnement en extérieur (18).

4. Procédé selon la revendication 3, **caractérisé par** une caractéristique suivante :
- la commande d'antenne (24) s'effectue au moyen d'un multiplexeur (32) alimenté d'un générateur de fréquence (34) par un modulateur de données (33).

5. Procédé selon la revendication 1, **caractérisé par** les caractéristiques suivantes :
- en fonction de l'état réel (13-17), le système électronique (50) attribue le lieu (12) à une zone desservie (43) pour le réseau à large bande ou à une zone non desservie (44) pour le réseau à large bande et,
- si le lieu (12) est attribué à la zone non desservie (43), le système électronique (50) agit comme le répéteur (20).

6. Procédé selon la revendication 5, **caractérisé par** les caractéristiques suivantes :
- si le lieu (12) est attribué à la zone desservie (43), le système électronique (50) agit comme la station de base (19).

7. Système électronique (50) pour l'établissement d'un réseau à large bande,
**caractérisé par**
- des moyens équipés de telle manière qu'ils déterminent un lieu géographique (12) du système électronique (50),
- des moyens équipés de telle manière qu'ils sélectionnent un fonctionnement en extérieur du système électronique (50) dans le réseau à large bande en fonction du lieu (12),
- des moyens équipés de telle manière qu'ils suivent un protocole de communication du réseau à large bande dépendant du fonctionnement en extérieur, le système électronique agissant selon le fonctionnement en extérieur (18) comme
i. un répéteur (20),
ii. une station de base de préférence multi-prestataire (19),
iii. un commutateur,
iv. une plate-forme,
v. une passerelle (21),
vi. un point d'accès (22) ou
vii. un terminal de communication (42), **caractérisé par** les caractéristiques suivantes :
- des moyens équipés de telle manière qu'ils mesurent sur le lieu (12) un état réel (13-17) du réseau à large bande défini pour l'exposition au rayonnement admissible par les bandes de fréquence (13) utilisées dans l'environnement et la puissance (14) respective des signaux qui y sont saisis, la vitesse de chargement et de téléchargement (15) ainsi que les limites en médecine environnementale (16, 17), la sélection du fonctionnement en extérieur dépendant également de l'état réel et
- des moyens équipés de telle manière qu'ils signalent au moins le lieu (12) et le fonctionnement en extérieur (18) par une dorsale de communication (41) commune à une base de données centrale (26).

8. Programme informatique configuré pour effectuer toutes les étapes d'un procédé (10) selon l'une quelconque des revendications 1 à 6.

9. Support de stockage déchiffrable machinellement par un programme informatique qui y est enregistré selon la revendication 8.
